# EUROPEAN PATENT APPLICATION

(11) **EP 2 480 041 A1**
(43) Date of publication of application: **25.07.2012**
(21) Application number: 10816584.6
(22) Date of filing: 16.04.2010
(51) Int. Cl.: H04W 88/00

(54) **BASE STATION AND NEIGHBOR BASE STATION INFORMATION TRANSMISSION METHOD**

(30) Priority: 15.09.2009 CN 200910169191
(71) Applicant: Fujitsu Limited, Kawasaki-shi, Kanagawa 211-8588 (JP)
(72) Inventor: LU, Yanling, Beijing 100025 (CN); ZHOU, Hua, Beijing 100025 (CN)
(74) Representative: Stebbing, Timothy Charles
(86) International application number: PCT/CN2010/071835
(87) International publication number: WO 2011/032380

(57) **Abstract**

The embodiments of the present invention relate to a base station and a method for transmitting adjacent base station information. The base station comprising: an information acquiring unit configured to acquire information of respective adjacent base stations relevant to a terminal to be handed-over; a determining unit configured to, according to the information, determine information relevant to the adjacent base stations to be transmitted to the terminal; and a transmitting unit configured to transmit the information relevant to the adjacent base stations determined by the determining unit to the terminal.

## Description

### Field of the Invention

The invention relates to a communication system, and particularly, to a method and an apparatus for propagating adjacent cell information in the communication system.

### Background of the Invention

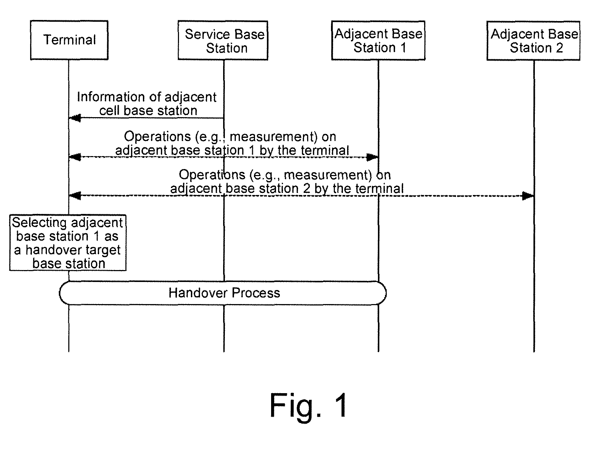

In the mobile communication system, when a terminal is roaming and handed over between the cells, a target base station shall be selected before the handover, i.e., the candidate target base stations (adjacent cell base stations) shall be measured and compared to select an adjacent base station of the best performance as the target base station. Before the measurement, generally, the current service base station shall notify the terminal of some useful information of the adjacent cell base stations, so as to promote the measurement of the adjacent cell base stations by the terminal, as illustrated in Fig. 1. Presently, the service base station mainly uses two methods to notify the terminal of the information of the adjacent cell base stations.

Broadcasting: the service base station broadcasts relevant information of the adjacent cell base stations through a broadcast channel. Any terminal served by the service base station can receive the broadcasted information. When the content of the broadcast message is changed, the service base station shall broadcast the changed content, and all the terminals served by the service base station update the received information according to the received content.

Unicasting: the service base station seriatim notifies, one by one, each of relevant terminals of the information of the adjacent cell base stations through unicasting.

During the study of the present invention, the inventor finds that in the broadcasting manner, the broadcast message is designed for all the terminals, and its content cannot well fit the actual condition of each terminal. In certain cases, information useful/accurate to some terminals are useless/inaccurate to other terminals. If the broadcast message includes such information, the radio resources are wasted in respect to some terminals, while if the information is not included, the subsequent measurement of other terminals will be influenced due to the unavailability of the information. Although corresponding message content can be designed for each base station in the unicasting manner to well ensure the flexibility and accuracy of the message, many contents are completely identical to most or all of the terminals due to the content characteristics of the information of the adjacent cell base stations. If such contents are repeated in each unicast message, the radio resources will be obviously wasted.

### Summary of the Invention

In view of the above defects of the prior art, the embodiments of the present invention are proposed to eliminate or relieve one or more problems of the prior art, and provide at least one beneficial selection.

Aspect 1: a base station, comprising: an information acquiring unit configured to acquire information relevant to a terminal to be handed-over of respective adjacent base stations; a determining unit configured to, according to the information, determine information relevant to the adjacent base stations to be transmitted to the terminal; and a transmitting unit configured to transmit the information relevant to the adjacent base stations determined by the determining unit to the terminal.

Aspect 2: the base station according to aspect 1, wherein the information is handover priorities of the respective adjacent base stations with respect to the terminal.

Aspect 3: the base station according to aspect 2, wherein the information acquiring unit determines the handover priorities of the respective adjacent base stations with respect to the terminal according to positions of the respective adjacent base stations and a position of the terminal.

Aspect 4: the base station according to aspect 2, wherein the information acquiring unit determines the handover priorities of the respective adjacent base stations with respect to the terminal according to processing loads of the respective adjacent base stations and a service type of the terminal.

Aspect 5: the base station according to aspect 2, wherein the determining unit determines one or more pieces of adjacent base station information with a highest handover priority or with handover priorities higher than a predetermined priority threshold value as the information relevant to the adjacent base stations to be transmitted to the terminal, according to the handover priorities of the respective adjacent base stations with respect to the terminal.

Aspect 6: the base station according to aspect 1, wherein the determining unit further determines a transmission manner of the information relevant to the adjacent base stations, and the transmitting unit transmits the information relevant to the adjacent base stations to the terminal in the transmission manner determined by the determining unit.

Aspect 7: the base station according to aspect 6, wherein when the information relevant to the adjacent base stations is identical to terminals to be handed-over in a number more than a threshold value, the determining unit transmits the information relevant to the adjacent base stations in broadcasting or multicasting manner; and when the information relevant to the adjacent base stations is identical to terminals to be handed-over in a number less than the threshold value, the determining unit transmits the information relevant to the adjacent base stations in unicasting manner.

Aspect 8: the base station according to aspect 6, wherein the determining unit divides the determined information relevant to the adjacent base stations into at least two parts, and determines to transmit them in different transmission manners.

Aspect 9: the base station according to aspect 8, wherein the determining unit determines to transmit, in a broadcasting or a multicasting manner, a part of the information relevant to the adjacent base stations, which is identical to terminals to be handed-over in a number more than a threshold value, and determines to transmit, in a unicasting manner, a part of the information relevant to the adjacent base stations, which is identical to terminals to be handed-over in a number less than the threshold value .

Aspect 10: the base station according to aspect 2, wherein the determining unit determines the information and identifiers of all the adjacent base stations as the information relevant to the adjacent base stations.

Aspect 11: the base station according to aspect 9, wherein the transmitting unit transmits respective parts of the information relevant to the adjacent base stations in the same frame.

Aspect 12: the base station according to aspect 1, wherein the determining unit determines a transmission manner of the information relevant to the adjacent base stations according to conditions of downlink resources.

Aspect 13: a method for transmitting adjacent base station information, comprising: acquiring information of respective adjacent base stations relevant to a terminal to be handed-over; according to the information, determining information relevant to the adjacent base stations to be transmitted to the terminal; and transmitting the information relevant to the adjacent base stations determined by the determining step to the terminal.

Aspect 14: the method according to aspect 13, wherein the determining further determines a transmission manner of the information relevant to the adjacent base stations, and the transmitting transmits the information relevant to the adjacent base stations to the terminal in the transmission manner determined by the determining step.

Aspect 15: the method according to aspect 14, wherein the determining divides the determined information relevant to the adjacent base stations into at least two parts, and determines to transmit them in different transmission manners.

Aspect 16: the method according to aspect 15, wherein the determining determines to transmit, in a broadcasting or a multicasting manner, a part of the information relevant to the adjacent base stations, which is identical to terminals to be handed-over in a number more than a threshold value, and determines to transmit, in a unicasting manner, a part of the information relevant to the adjacent base stations, which is identical to terminals to be handed-over in a number less than the threshold value.

Transmitting the message of the adjacent cell base stations according to the embodiments of present invention not only provides a complete adjacent cell message transmission, but also effectively saves the radio resources and reduces the signaling redundancy.

With reference to the following descriptions and drawings, these and further aspects and features of the present invention will be clearer. The descriptions and drawings concretely disclose the specific embodiments of the present invention, and specify the principle of the invention and the ways that can be adopted. It shall be appreciated that the scope of the present invention is not limited thereby. Within the scope of the spirit and provisions of the accompanied claims, the present invention includes various changes, modifications and equivalents.

Features described and/or illustrated with respect to one embodiment can be used in one or more other embodiments in a same or similar way, and/or combine with or replace features in other embodiments.

To be noted, the term "include/comprise/have" or "including/comprising/having" herein refers to existence of feature, component, step and assembly, not excluding existence or addition of one or more other features, components, steps and assemblies.

### Brief Description of the Drawings

Fig. 1 schematically illustrates actions of a terminal before performing intercell handover;
Fig. 2 schematically illustrates a block diagram of a base station according to an embodiment of the present invention;
Fig. 3 schematically illustrates adjacent base stations and terminals performing intercell handover at a certain timing;
Fig. 4 schematically illustrates adjacent base stations and terminals performing intercell handover at another timing;
Fig. 5 schematically illustrates different methods for transmitting different parts of adjacent base station information;
Fig. 6 schematically illustrates a block diagram of a receiver according to an embodiment of the present invention; and
Fig. 7 schematically illustrates a flowchart of a method for transmitting adjacent base station information according to an embodiment of the present invention.

### Detailed Description of the Preferred Embodiments

With reference to the drawings, the embodiments of the present invention are detailedly described as follows. To be noted, the descriptions of the embodiments of the present invention are just exemplary, rather than limiting the protection scope of the present invention.

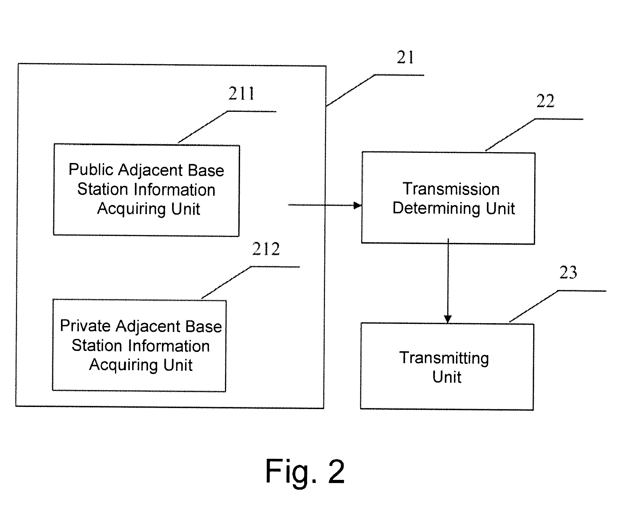

Fig. 2 schematically illustrates a block diagram of a base station according to an embodiment of the present invention. To be noted, the descriptions of the base station are just made to enable a person skilled in the art to understand the principle and implementation of the embodiments of the present invention, while descriptions of other components of the base station, which are irrelevant to understand the present invention but necessary to implement the functions of the base station, are omitted herein.

As illustrated in Fig. 2, the base station according to an embodiment of the present invention includes an adjacent base station information acquiring unit 21, a transmission determining unit 22 and a transmitting unit 23.

The adjacent base station information acquiring unit 21 includes a public adjacent base station information acquiring unit 211 and a private adjacent base station information acquiring unit 212. Through a wired and/or wireless connection, the public adjacent base station information acquiring unit 211 can directly or indirectly acquire, from the adjacent base stations, information relevant to the adjacent base stations, such as identification (ID), type (e.g., macro, micro or Femto base station; open or private Femto base station), geographical position, processing load, and so on of the adjacent base station. In the information relevant to the adjacent base stations, some information are basically fixed, e.g., ID, type, geographical position, etc. of the adjacent base station, thus those information can be stored in a memory device of the base station. The public adjacent base station information acquiring unit 211 can read those information from the memory device of the base station. Some other information is variable at all times, e.g., the processing load of the adjacent base station, etc. The public adjacent base station information acquiring unit 211 acquires the variable information from each adjacent base station when necessary. The above adjacent base station information is irrelevant to the terminal to be handed over and identical to all the terminals, thus it is referred to as public adjacent base station information.

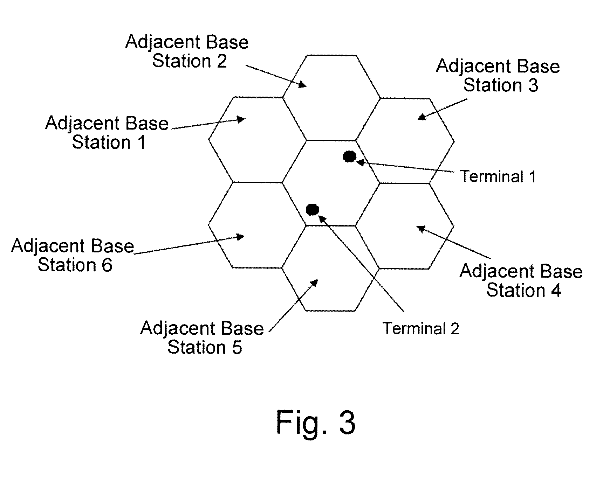

The private adjacent base station information acquiring unit 212 acquires information of adjacent base station relevant to the terminal to be handed over, such as handover priority of each base station with respect to each terminal to be handed-over (i.e., the probability for the adjacent cell to become a target base station, the higher the probability is, the higher the priority is, and a measurement shall be more preferably carried out). In one embodiment, the private adjacent base station information acquiring unit 212 determines handover priority of each base station with respect to each terminal to be handed-over according to geographical positions of the terminal to be handed-over and the adjacent base station. For example in the cell as illustrated in Fig. 3, for terminal 1 to be handed-over, it is closer to adjacent base stations 2 and 3 in geographical positions, thus the handover priorities of adjacent base stations 2 and 3 with respect to terminal 1 are set as high priorities, while the handover priorities of adjacent base stations 1 and 4 with respect to terminal 1 are set as intermediate priorities, and the handover priorities of adjacent base stations 5 and 6 with respect to terminal 1 are set as low priorities. Similarly, in case of terminal 2, the handover priorities of adjacent base stations 2 and 3 with respect to terminal 2 are set as low priorities, while the handover priorities of adjacent base stations 5 and 6 with respect to terminal 2 are set as high priorities, and the handover priorities of adjacent base stations 1 and 4 with respect to terminal 2 are set as intermediate priorities. It can be seen that the handover priority of each base station with respect to each terminal to be handed-over is relevant to each terminal itself (e.g., position), and the same adjacent base station may have different handover priorities with respect to different terminals. Thus the adjacent base station information relevant to the terminal to be handed-over itself is referred to as private adjacent base station information.

In an alternative embodiment, the handover priority of an adjacent base station with respect to a terminal can be determined according to the service type of the terminal and the processing load of the adjacent base station. For example, when the service type of terminal 1 is the voice call with a high requirement of real-time and the service load of adjacent base station 3 is large, the handover priority of adjacent base station 2 with respect to terminal 1 can be set as higher than that of adjacent base station 3 with respect to terminal 1. While for example the service type of terminal 1 is the short-message service not having a high requirement of real-time, the handover priority of adjacent base station 3 with respect to terminal 1 can be set as higher than that of adjacent base station 2 with respect to terminal 1, even the service load of adjacent base station 3 is large.

The following two methods can be used coordinately: determining the handover priority of an adjacent base station with respect to a terminal according to geographical positions of the terminal and the adjacent base station; and determining the handover priority of an adjacent base station with respect to a terminal according to the service type of the terminal and the processing load of the adjacent base station.

The transmission determining unit 22 can determine the information relevant to the adjacent base stations transmitted to each terminal to be handed-over, according to the private adjacent base station information determined by the private adjacent base station information acquiring unit 212.

For example, the transmission determining unit 22 may determine to only transmit the information of predetermined adjacent base stations with top handover priorities. As illustrated in Fig. 3, with respect to terminal 1, for example it can be determined to transmit information of adjacent base stations 2 to 4 to terminal 1 when information of three adjacent base stations with top handover priorities is determined to be transmitted. Alternatively, the transmission determining unit 22 can determine to transmit information of all adjacent base stations with their handover priorities higher than a predetermined threshold value. For example, it can be determined to transmit information of adjacent base stations 1 to 4 with their handover priorities higher than a predetermined threshold value (intermediate priority). Under such condition, in one embodiment it may be only required to transmit a list of IDs of these adjacent base stations.

The transmission determining unit 22 determines the contents to be transmitted to other terminals similarly.

The transmitting unit 23 transmits the content determined by the transmission determining unit 22 to terminal 1 through broadcasting, unicasting or multicasting.

After receiving the information of adjacent base stations from the transmitting unit, the receiver only performs operations (e.g., measurement) on the base stations whose information is transmitted. As negotiated, when the transmitted information of the adjacent base stations has a priority order, the adjacent base stations will be measured in the priority order.

In this embodiment, the base station determines information of the adjacent base station relevant to each terminal, so as to reduce the processing load of the receiver, and promote the handover process.

In an embodiment determining information relevant to the adjacent base station transmitted to each terminal to be handed-over, the transmission determining unit 22 determines the private adjacent base station information and the information of all the adjacent base stations irrelevant to the terminal as the information relevant to the adjacent base station. For example in an embodiment, the transmission determining unit 22 determines IDs, types and handover priorities with respect to terminal 1 of all the adjacent base stations as adjacent base station information to be transmitted to terminal 1, and determines IDs, types and handover priorities with respect to terminal 2 of all the adjacent base stations as adjacent base station information to be transmitted to terminal 2. Adjacent base station information to be transmitted to other terminals is determined similarly. For example in another embodiment, the transmission determining unit 22 determines IDs, and handover priorities with respect to terminal 1 of all the adjacent base stations as adjacent base station information to be transmitted to terminal 1, and determines IDs, and handover priorities with respect to terminal 2 of all the adjacent base stations as adjacent base station information to be transmitted to terminal 2. Adjacent base station information to be transmitted to other terminals is determined similarly.

For example in still another embodiment, the transmission determining unit 22 determines IDs of all the adjacent base stations, and handover priorities of base stations whose handover priorities with respect to terminal 1 are higher than a predetermined threshold value as adjacent base station information to be transmitted to terminal 1, and determines IDs of all the adjacent base stations, and handover priorities of base stations whose handover priorities with respect to terminal 2 are higher than the predetermined threshold value as adjacent base station information to be transmitted to terminal 2. Adjacent base station information to be transmitted to other terminals is determined similarly. For example in still another embodiment, the transmission determining unit 22 determines IDs of all the adjacent base stations and handover priorities of a predetermined number of adjacent base stations with top handover priorities with respect to terminal 1 among all the adjacent base stations as adjacent base station information to be transmitted to terminal 1. Adjacent base station information to be transmitted to other terminals is determined similarly.

In another embodiment of the present invention, the transmission determining unit 22 further determines the way of transmitting the adjacent base station information.

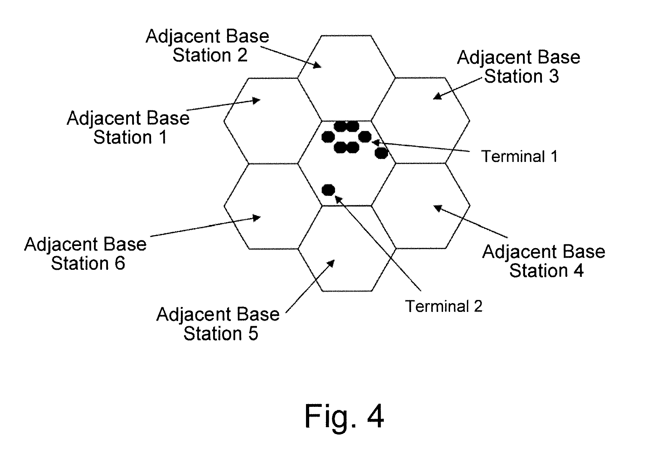

As schematically illustrated in Fig. 4, at a certain timing many terminals near terminal 1 need to be handed over. For these terminals, the adjacent base station information to be transmitted to them determined by the transmission determining unit 22 may be completely the same as the determined adjacent base station information to be transmitted to terminal 1, thus the completely same information can be transmitted by multicasting. Oppositely, the adjacent base station information transmitted to terminal 2 is different from any information transmitted to other terminals. In that case, it can be determined to transmit the adjacent base station information to terminal 2 by unicasting.

There are many manners for the transmission determining unit 22 to determine the transmission manner. For example, when the information relevant to the adjacent base stations is identical to terminals to be handed-over in a number more than a threshold value, the transmission determining unit transmits the information relevant to the adjacent base stations through broadcasting or multicasting; and when the information relevant to the adjacent base stations is identical to terminals to be handed-over in a number less than the threshold value, the transmission determining unit transmits the information relevant to the adjacent base stations through unicasting. Herein one threshold value is used to determine the transmission manner of broadcasting or multicasting and the transmission manner of unicasting, respectively, but another threshold value may be further adopted to determine the transmission manners of broadcasting and multicasting, respectively. For example, when the number of terminals to which the identical adjacent base station information is to be transmitted is less than 5, the adjacent base station information is transmitted through unicasting; when the number of terminals to which the identical adjacent base station information is to be transmitted is more than 5 and less than 50, the adjacent base station information is transmitted through multicasting; and when the number of terminals to which the identical adjacent base station information is to be transmitted is more than 50, the adjacent base station information is transmitted through broadcasting.

In an embodiment, the transmission determining unit 22 divides the information transmitted to each terminal into at least two parts and transmits them in different ways, respectively. For example, under the above condition that IDs, service types and handover priorities with respect to terminal 1 of all the adjacent base stations are determined as adjacent base station information to be transmitted to terminal 1, and IDs, service types and handover priorities with respect to terminal 2 of all the adjacent base stations are determined as adjacent base station information to be transmitted to terminal 2, the transmission determining unit 22 classifies IDs and service types of respective adjacent base stations into one part since they are identical to all the terminals and determines to transmit through broadcasting. But the handover priorities of respective adjacent base stations with respect to respective terminals may be different, and the transmission determining unit 22 classifies the handover priorities into a second part and determines to transmit through unicasting, respectively.

Under the above condition that the transmission determining unit 22 determines IDs of all the adjacent base stations and handover priorities of adjacent base stations whose handover priorities with respect to terminal 1 are higher than a predetermined threshold value as adjacent base station information to be transmitted to terminal 1, the transmission determining unit 22 classifies IDs of respective adjacent base stations into one part since they are identical to all the terminals and determines to transmit through broadcasting. The transmission determining unit 22 further determines the number of terminals with respect to which the handover priorities of respective adjacent base stations are identical, and when the number is more than a predetermined threshold value, the transmission is carried out through multicasting or broadcasting; and when the number is less than the predetermined threshold value, the transmission is carried out through unicasting.

The handover priorities can be reflected implicitly or explicitly.

When the adjacent base station information transmitted to a certain terminal includes common adjacent base station IDs identical to all the terminals, the priorities are represented by selecting adjacent base station IDs according to a certain rule (the priorities are top ones or higher than a threshold value) in an order from high to low or from low to high, so as to construct a new list of adjacent base station IDs. In that case, the priorities are reflected implicitly, and the adjacent base station ID can be replaced by its index in the list of common adjacent base station IDs. In addition, when there is a list of common adjacent base station IDs, the priorities can be represented by directly representing corresponding priorities in the order of the list of common adjacent base station IDs. In that case, the priorities are reflected explicitly.

When the adjacent base station information transmitted to a certain terminal does not include a common adjacent base station ID, the priorities can be represented by directly giving several base station IDs according to a certain rule in the priority order. In that case, the priorities are reflected implicitly. The priorities can also be reflected directly for example by providing corresponding priorities while giving the base station IDs.

In another embodiment of the present invention, the transmission determining unit 22 determines to transmit, through broadcasting or multicasting, a part of information relevant to the adjacent base stations to be transmitted to each terminal, which is identical to terminals to be handed-over in a number more than a threshold value, and determines to transmit, through unicasting, a part of information relevant to the adjacent base stations, which is identical to terminals to be handed-over in a number less than the threshold value.

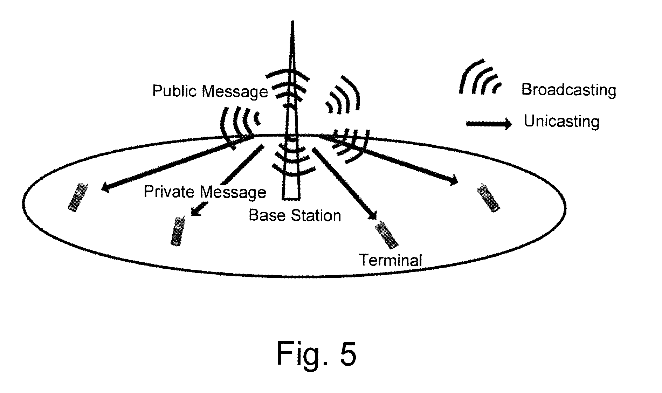

Fig. 5 schematically illustrates the conditions of dividing adjacent base station information into different parts and transmitting them in different ways. As illustrated in Fig. 5, the public information is transmitted through multicasting or broadcasting, while the private information is transmitted through unicasting.

This embodiment not only provides a complete adjacent cell message transmission, but also effectively saves the radio resources and reduces the signaling redundancy.

When the priorities of the adjacent base stations in the multicast message or broadcast message received by the terminal are different from those of the adjacent base stations in the unicast message, the priorities of the adjacent base stations in the unicast message shall prevail. During the concrete implementation, in order to prevent the terminal from measuring according to the priorities in the broadcast message in a gap between receiving the broadcast and unicast messages, the transmitting unit 23 may transmit public and private messages to the terminal in the same frame/sub-frame.

In addition, the transmitting unit 22 may determine the transmission manner according to the conditions of the downlink resources. When the base station finds that the downlink radio resources are sufficient during a certain period, the transmitting unit 22 can transmit, to each terminal through unicasting, the priority information of each adjacent cell base station to be transmitted. When the base station finds that the downlink radio resources are insufficient during a certain period, the transmitting unit 22 can divide the adjacent base station information to be transmitted to each terminal into two or more parts according to the above manner, and transmit respective parts in different ways.

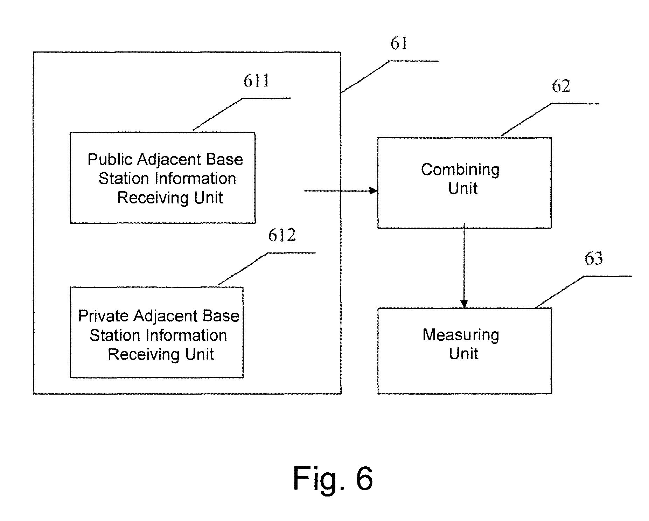

Fig. 6 schematically illustrates a block diagram of a receiver according to an embodiment of the present invention. As illustrated in Fig. 6, the receiver according to an embodiment of the present invention includes an adjacent base station information receiving unit 61, a combining unit 62 and a measuring unit 63. The adjacent base station information receiving unit 61 includes a public adjacent base station information receiving unit 611 that receives public adjacent base station information transmitted from the base station, and a private adjacent base station information receiving unit 612 that receives private adjacent base station information transmitted from the base station. Although the public adjacent base station information receiving unit 611 and the private adjacent base station information receiving unit 612 are illustrated as individual modules herein, they also can be implemented by one module. On the other hand, the public and private adjacent base station information from the base station can be transmitted in the same channel and manner, transmitted in the same frame or sub-frame, or transmitted in different manners from different channels.

For example, the public adjacent base station information may be transmitted from the broadcast channel, while the private adjacent base station information may be transmitted from the unicast channel. In that case, they are combined by the combining unit 62. The measuring unit 63 measures the adjacent base stations according to the combined public and private adjacent base station information.

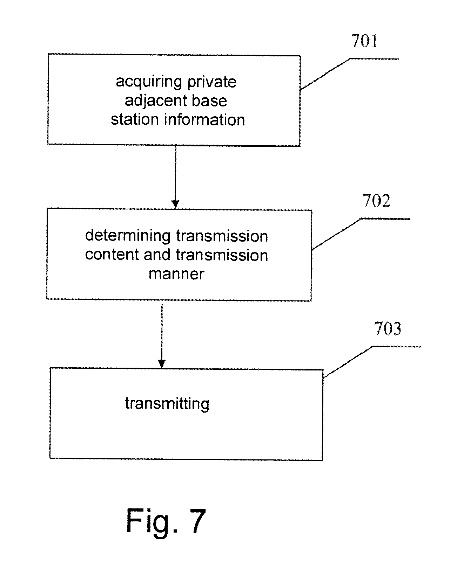

Fig. 7 schematically illustrates a flowchart of a method for transmitting adjacent base station information according to an embodiment of the present invention.

As illustrated in Fig. 7, the method for transmitting adjacent base station information according to an embodiment of the present invention firstly acquires private adjacent base station information in step 701. As described above, the private adjacent base station information for example is the handover priority of each adjacent base station with respect to each terminal to be handed-over.

Next in step 702, determining information relevant to the adjacent base stations to be transmitted to each terminal. In one embodiment, the base station determines the public adjacent base station information of all the adjacent base stations and handover priorities of respective base stations with respect to a certain terminal as the information to be transmitted to the terminal. In another embodiment, the base station determines the higher handover priorities of some of the adjacent base stations with respect to a certain terminal as the information to be transmitted to the terminal. In still another embodiment, the base station determines the public adjacent base station information of all the adjacent base stations and private adjacent base station information of all the adjacent base stations with respect to a certain terminal as the information to be transmitted to the terminal.

In addition, the transmission manner is determined in step 702. For example, the base station divides the information to be transmitted to each terminal into two or more parts, wherein the part identical to most of the terminals is transmitted through multicasting or broadcasting, while the part identical to few terminals is transmitted through unicasting. In step 702, the transmission manner can also be determined according to the conditions of the downlink resources.

In step 703, the transmission content determined in step 702 is transmitted to each terminal according to the transmission manner determined in step 702. In case the public and private adjacent base station information is both transmitted, they can be transmitted in the same frame or sub-frame in step 703.

The aforementioned descriptions of the embodiments of the present invention are just exemplary, for the purpose of enabling a person skilled in the art to clearly acquire the implementations of the embodiments of the present invention. Other components necessary to the works of apparatuses (e.g., base station and receiver) concerned in implementing the embodiments of the present invention while clear to a person skilled in the art are not described herein.

The above apparatus and method of the present invention may be implemented by hardware, or a combination of hardware and software. The present invention relates to such a computer readable program that enables a logic part to implement the previously described apparatuses or components, or implement the previously described methods or steps, when the program is executed by the logic part. The present invention also relates to storage medium for storing the above program, e.g., hard disk, magnetic disk, optical disk, DVD and flash memory.

The present invention is described as above in conjunction with the concrete embodiments. But a person skilled in the art shall be appreciated that the descriptions are just exemplary, instead of limitations to the protection scope of the present invention. A person skilled in the art can make various modifications and changes to the present invention based on spirit and principle of the present invention, and those modifications and changes also fall within the scope of the present invention

## Claims

1. A base station, comprising:
an information acquiring unit configured to acquire information relevant to a terminal to be handed-over of respective adjacent base stations;
a determining unit configured to, according to the information, determine information relevant to the adjacent base stations to be transmitted to the terminal;
a transmitting unit configured to transmit the information relevant to the adjacent base stations determined by the determining unit to the terminal.

2. The base station according to claim 1, wherein the information relevant to a terminal to be handed-over is handover priorities of the respective adjacent base stations with respect to the terminal.

3. The base station according to claim 2, wherein the information acquiring unit determines the handover priorities of the respective adjacent base stations with respect to the terminal according to positions of the respective adjacent base stations and a position of the terminal, and/or determines the handover priorities of the respective adjacent base stations with respect to the terminal according to processing loads of the respective adjacent base stations and a service type of the terminal.

4. The base station according to claim 2, wherein the determining unit determines one or more pieces of adjacent base station information with a highest handover priority or with handover priorities higher than a predetermined priority threshold value as the information relevant to the adjacent base stations to be transmitted to the terminal, according to the handover priorities of the respective adjacent base stations with respect to the terminal.

5. The base station according to claim 1, wherein the determining unit further determines a transmission manner of the information relevant to the adjacent base stations, and the transmitting unit transmits the information relevant to the adjacent base stations to the terminal in the transmission manner determined by the determining unit.

6. The base station according to claim 5, wherein the determining unit divides the determined information relevant to the adjacent base stations into at least two parts, and determines to transmit them in different transmission manners.

7. The base station according to claim 6, wherein the determining unit determines to transmit, in a broadcasting or a multicasting manner, a part of the information relevant to the adjacent base stations, which is identical to terminals to be handed-over in a number more than a threshold value, and determines to transmit, in a unicasting manner, a part of the information relevant to the adjacent base stations, which is identical to terminals to be handed-over in a number less than the threshold value.

8. The base station according to claim 2, wherein the determining unit determines the information relevant to a terminal to be handed-over and identifiers of all the adjacent base stations as the information relevant to the adjacent base stations.

9. The base station according to claim 1, wherein the determining unit determines a transmission manner of the information relevant to the adjacent base stations according to conditions of downlink resources.

10. A method for transmitting adjacent base station information, comprising:
acquiring information relevant to a terminal to be handed-over of respective adjacent base stations;
according to the information, determining information relevant to the adjacent base stations to be transmitted to the terminal;
transmitting the information relevant to the adjacent base stations determined by the determining step to the terminal.
